Europäisches Patentamt

European Patent Office

Office européen des brevets

(19)

(11) Veröffentlichungsnummer: **0 288 666 B1**

# (12) EUROPÄISCHE PATENTSCHRIFT

(45) Veröffentlichungstag der Patentschrift: **08.04.92**

(51) Int. Cl.⁵: **B60K 41/04**, B60T 8/00, B60K 23/08, B60K 23/04

(21) Anmeldenummer: **88101457.5**

(22) Anmeldetag: **02.02.88**

(54) Anordnung zur Steuerung der Kraftübertragung eines allrad-angetriebenen Fahrzeugs.

(30) Priorität: **29.04.87 DE 3714330**

(43) Veröffentlichungstag der Anmeldung:
**02.11.88 Patentblatt 88/44**

(45) Bekanntmachung des Hinweises auf die Patenterteilung:
**08.04.92 Patentblatt 92/15**

(84) Benannte Vertragsstaaten:
**DE FR GB IT SE**

(56) Entgegenhaltungen:
**EP-A- 0 206 473**
**DE-A- 3 437 435**
**DE-A- 3 437 436**
**DE-A- 3 626 025**

(73) Patentinhaber: **Dr.Ing.h.c. F. Porsche Aktien-gesellschaft**
**Porschestrasse 42**
**W-7000 Stuttgart 40(DE)**

(72) Erfinder: **Bantle, Manfred, Dipl.-Ing.**
**Eichendorffstrasse 115**
**W-7143 Vaihingen/Enz(DE)**

EP 0 288 666 B1

## Beschreibung

Die Erfindung betrifft eine Anordnung zur Steuerung der Kraftübertragung eines allradangetriebenen Fahrzeugs nach der Gattung des Hauptanspruchs.

Aus der DE-A-34 37 435 ist eine derartige Anordnung zur Steuerung der Kraftübertragung eines allradangetriebenen Fahrzeugs bekannt. Bei diesem Fahrzeug wird eine kontinuierlich steuerbare Längskupplung mittelbar über eine Größe gesteuert, die dem Zugkraftüberschuss an den Antriebsrädern des Kraftfahrzeugs entspricht. Dieser Zugkraftüberschuss wird aus der Differenz einer Antriebskraft (Sollzugkraft) der Brennkraftmaschine und dem Fahrwiderstand ermittelt.

Eine weitere Steuerung für ein derartiges Fahrzeug geht aus der DE-A-34 37 436 hervor. Bei dieser bekannten Steuerung wird eine steuerbare Längskupplung über eine Größe angesteuert, die aus einem Produkt der Antriebskraft (Sollzugkraft) der Brennkraftmaschine und einem primär sollzugkraftabhängigen Verteilungsfaktor bestimmt wird.

Nach dem Patent DE-C-36 08 059 (Veröffentlichungstag 9.7.87) ist eine Anordnung zur Steuerung der Kraftübertragung eines allradangetriebenen Fahrzeugs geschaffen, die bei verhältnismäßig geringer Anzahl an sensorisch erfassten Betriebs- und Fahrparametern und geringem steuerungstechnischem Aufwand erreicht, daß die traktionbedingten Vorteile des Allradantriebs mit den Vorteilen des Fahrverhaltens des Zweiradantriebs kombiniert werden, ohne deren jeweilige Nachteile in Kauf nehmen zu müssen. Ein derartiges Fahrzeug ist beispielsweise in dem Artikel von H. Bott und M. Bantle "Der Porsche Typ 959 - Gruppe B - ein besonderes Automobil", Teil 2, ATZ 88 (1986), Heft 6, Seiten 353 bis 356, beschrieben.

Dies wird in erster Linie dadurch erreicht, daß ein Zugkraftanteil $F_{zf}$ der Räder an der Zusatzantriebsachse über einen mit einem Verteilungsfaktor multiplizierten Betrag einer Sollzugkraft $F_{zs}$ bestimmt wird; dieser wird aus einer (vom Fahrer gewünschten) Solleistung $P_s$ und einer Fahrzeuggeschwindigkeit $v_f$ ermittelt. Der Verteilungsfaktor wird hierbei aus einem Zugkraftüberschuß bestimmt, welcher sich aus der Differenz der Sollzugkraft $F_{zs}$ und dem Fahrwiderstand $F_v$ des Fahrzeugs errechnet.

Es ist Aufgabe der Erfindung, eine Anordnung zur Steuerung der Kraftübertragung auf die Räder eines allrad-angetriebenen Fahrzeugs zu schaffen, welche das mit der Anordnung nach der DE-C-36 08 059 erreichbare fahrdynamische Gesamtverhalten eines Kraftfahrzeugs verfeinert und insbesondere das Lastwechselverhalten bei Kurvenfahrt und die Längsstabilität des Fahrzeugs weiter verbessert.

Die Aufgabe wird erfindungsgemäß durch die kennzeichnenden Merkmale des Anspruchs 1 gelöst. Weitere vorteilhafte Ausbildungen der Erfindung sind in den Unteransprüchen enthalten.

Die Vorteile der Erfindung sind in erster Linie darin zu sehen, daß das fahrdynamische Gesamtverhalten eines Kraftfahrzeugs weiter verbessert wird, da die Anordnung besser auf innere (beispielsweise Lastwechsel) und äußere (beispielsweise sich abrupt ändernde Reibwertverhältnisse im Rad-/Fahrbahn-Kontakt) Störgrößen reagiert, das Fahrzeug insbesondere bei Kurvenfahrt stabilisiert und insgesamt beruhigend auf das Gesamtfahrverhalten einwirkt und Längs- und Querstabilität verbessert.

Dies wurde in erster Linie dadurch erreicht, daß eine kontinuierlich ansteuerbare Längskupplung eines allradgetriebenen Kraftfahrzeugs mit einer geschwindigkeitsabhängigen Charakteristik angesteuert wird. Hierbei wird in einem niedrigen Geschwindigkeitsbereich (0 kleiner oder gleich $v_f$ kleiner oder gleich $v_{fa}$) die Ansteuerung unterdrückt, in einem höheren Geschwindigkeitsbereich ($v_{fa}$ kleiner $v_f$ kleiner oder gleich $v_{fb}$) von 0 beginnend, mit wachsender Geschwindigkeit auf einen Steuergrößenwert $p_l''_h$ angehoben und oberhalb dieses Geschwindigkeitsbereiches ($v_f$ größer $v_{fb}$) konstant gehalten. Geschwindigkeitsbereiche und Steuergrößenwert $p_l''_h$ sind zudem im Steuergerät durch Eingabe einer Stellgröße r (Fahrprogramm) variierbar.

Die Erfindung ist beispielhaft anhand von Zeichnungen erläutert und wird nachstehend näher beschrieben.

Es zeigt

Fig. 1 ein Schemabild einer Antriebseinheit eines Kraftfahrzeugs,

Fig. 2 ein Blockschaltbild eines Steuergeräts mit Eingangs- und Ausgangsgrößen,

Fig. 3 ein Blockschaltbild eines auf einem Steuergerät zur Steuerung einer Längskupplung implementieren Steuerverfahrens,

Fig. 4 ein Ansteuergrößen-Geschwindigkeitsdiagramm,

Fig. 5 ein Steuergrößenwert-Geschwindigkeitsdiagramm.

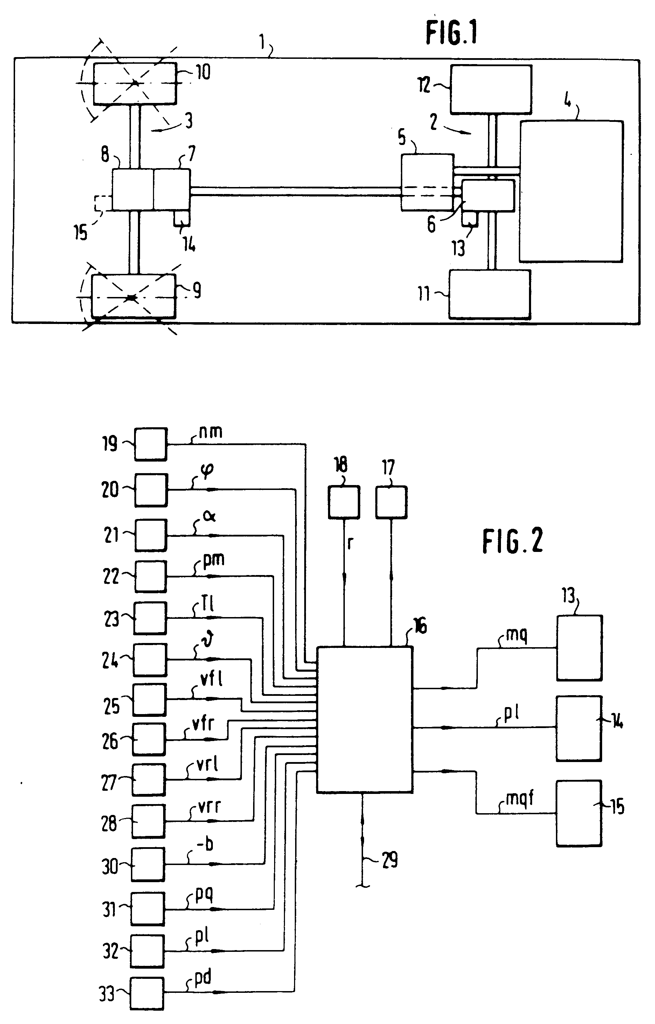

In Fig. 1 ist mit 1 ein allradantriebenes Kraftfahrzeug mit einer Hauptantriebsachse 2 (Hinterachse) und einer Zusatzantriebsachse 3 (Vorderachse) bezeichnet; z. B. im Bereich der Hauptantriebsachse 2, hier im Heckbereich des Kraftfahrzeugs 1, ist eine Brennkraftmaschine 4 angeordnet, die über eine Kupplungs-Getriebe-Einheit 5 ein kontinuierlich in seiner Sperrwirkung steuerbares Querdifferential 6 der Hauptantriebsachse 2 und zusätzlich über eine kontinuierlich steuerbare Längskupplung 7 ein Differential 8 der Zusatzantriebsachse 3 antreibt. Dieses ist in einer einfachen Ausführung als übliches Differentialgetriebe ausgeführt; es kann aber auch ein selbstsperrendes oder kontinuierlich in seinem Sperrmoment steuerbares Differentialgetriebe sein. Räder 9, 10 an der Zusatzantriebsachse 3 sind lenkbar ausgeführt, während Räder 11, 12 der Hauptantriebsachse 2 nicht lenkbar sind. Stellglieder 13, 14 zur Betätigung von einer Sperre des Querdifferentials 6 und der Längskupplung 7 sind lediglich symbolisch eingezeichnet, ebenso ein gestrichelt eingezeichnetes Stellglied 15 einer Sperre des Differentials der Zusatzantriebsachse 3, das nur im Falle eines kontinuierlich in seinem Sperrmoment steuerbaren Differentials benötigt wird; die Stellglieder können an den Aggregaten angeflanscht, teilweise oder ganz in diese integriert oder wenigstens teilweise außerhalb dieser angeordnet und mit diesen mechanisch, hydraulisch, pneumatisch oder elektrisch verbunden sein.

Das in Fig. 2 gezeigte Steuergerät 16 mit seinen Ein- und Ausgangsgrößen stellt eine Maximalkonfiguration dar, bei der außer dem Stellglied 14 der Längskupplung 7 auch noch das Stellglied 13 des Querdifferentials 6 und das Stellglied 15 des Differentials 8 angesteuert werden. Auch von den angeschlossenen Sensoren reicht bereits eine bestimmte Anzahl für ein gutes Funktionieren der Anordnung aus.

Es ist dabei angenommen, daß die Stellglieder linear wirken und eventuell mit unterlagerten Regelkreisen versehen sind. Selbstverständlich können die Regelkreise auch im Steuergerät 16 implementiert sein. Eventuelle Rückführungen von Meßwerten sind dabei nicht gezeigt. Ohnehin sind die in den Darstellungen gezeigten Verbindungen zwischen Funktionsblöcken eher als Wirkungslinien zu sehen.

Das Steuergerät 16 ist dabei bevorzugt auf der Basis eines Mikrorechnersystems aufgebaut, beispielsweise eines Typ 8051 der Fa. Intel (Einchip-Mikrorechner). Der Aufbau des Steuergeräts entspricht einer üblichen Prozeßrechnerkonfiguration mit Zentraleinheit, flüchtigen und nicht flüchtigen Speichern (RAM und ROM), Eingangs- und Ausgangsbausteinen, Zeitgebern usw.; daher wird auf den Aufbau nicht näher eingegangen.

An das Steuergerät 16 angeschlossen ist ferner ein Display 17, das im Armaturenbrettbereich des Kraftfahrzeuges angeordnet ist und einem Fahrer Informationen über einen augenblicklichen Zustand der Anordnung anzeigt, z. B., welche Differentialsperre zu wieviel Prozent betätigt ist und mit welchem Prozentsatz die Längskupplung das Antriebsmoment der Vorderachse zuteilt; ebenso können mögliche Fehler in der Anordnung angezeigt werden.

Eine, eine Stellgröße r abgebende Verstelleinheit 18 läßt eine gezielte Beeinflussung des Steuerverfahrens zu, die teils vom Fahrer und, teils nur von einem Servicepersonal vorgenommen werden können. Es soll dem Fahrer z. B. ermöglicht werden, bestimmte Steuerverfahren in Abhängigkeit von einem Fahrbahnzustand anzuwählen; bei einem in Schnee oder losem Untergrund festgefahrenen Fahrzeug kann es z.B. sinnvoll sein, einen starren Durchtrieb zur Zusatzantriebsachse und gegebenenfalls ein vollständiges Sperren der Differentiale einzustellen. Eine eventuelle sensorische Erfassung eines Reibwerts zwischen Rädern und einer Fahrbahn sei ebenfalls der Verstelleinheit 18 zugeordnet.

Das Wort sensorisch ist nicht unbedingt nur im eventuellen alleinigen Erfassen einer Meßgröße oder in einem Umwandeln der Meßgröße in eine andere physikalische Größe zu sehen, es kann auch ein Verarbeiten oder Vorverarbeiten einer oder mehrerer erfaßter Größen bedeuten.

Zur Berechnung einer - intern benötigten - Solleistung Ps erhält das rät 16 von einem Motordrehzahlmesser 19 ein Motordrehzahlsignal nm und entweder ein Fahrpedalsignal phi von einem Fahrpedalgeber 20 oder ein Drosselklappenwinkelsignal alpha von einem Drosselklappenwinkelgeber 21 und im Falle einer aufgeladenen Brennkraftmaschine, von einem Ladedruckgeber 22 ein Ladedrucksignal pm und von einem Ladelufttemperaturgeber 23 ein Ladelufttemperatursignal Tl.

Eine Erfassung eines Lenkeinschlags durch einen Lenkwinkelgeber 24 ist in den Grundversionen nicht vorgesehen, da das Steuergerät auch ohne ein Lenkeinschlagsignal ein hervorragendes Fahrverhalten gewährleistet; es wird lediglich zum Erreichen einer letzten Verfeinerung benötigt und sei deshalb nur der Vollständigkeit halber erwähnt.

Von den, den Rädern 9 und 10 zugeordneten Gebern 25 und 26 sowie den, den Rädern 11 und 12 zugeordneten Gebern 27 und 28 erhält die Steuereinheit 16 Signale vfl, vfr, vrl und vrr, die den Geschwindigkeiten dieser Räder an Zusatz- und Hauptantriebsachse 3, 2 entsprechen.

Diese Signale werden auch für ein Steuergerät eines Antiblockierbremssystems (ABS) benötigt, so daß ihre Signalerfassung bei Fahrzeugen, die mit einem derartigen System ausgerüstet sind, auch gemeinsam erfolgen kann, d. h., sie werden von einem der beiden Systeme erfaßt und dem anderen zur Verfügung gestellt.

Am Steuergerät 16 ist ein externes Bussystem 29 vorgesehen, über das das Steuergerät mit anderen, im Fahrzeug zu Steuerungs-, Meß- und Informationszwecken eingesetzten Digitalrechnersystemen, beispielsweise einem Steuergerät eines ABS oder einem Motormanagementrechner (Digitale Motorelektronik), kommunizieren kann. Diese Digitalrechnersysteme können dem Steuergerät dann bereits aufbereitete Signale (beispielsweise Solleistung Ps, Raddrehzahlen vfl, vfr, vrl, vrr, liefern, so daß die Sensoren 19 bis 23, 25 bis 28, entfallen können.

Dem System kann ferner ein Verzögerungssignal -b von dem Steuergerät eines ABS oder eines Bremslichtschalters 30 zugeführt werden, worauf das Steuergerät 16 bei einem Fahrzeug, das mit einem ABS ausgerüstet ist, wenigstens das Stellglied 14 der Längskupplung 7 soweit absteuert, daß das ABS einen auftretenden Bremsschlupf sicher erfassen und regelnd in die Dosierung der Bremskraft einwirken kann.

Bei Fahrzeugen ohne ABS kann es auch sinnvoll sein, die Stellglieder 13 bis 15 beim Bremsen voll anzusteuern, um ein Überbremsen einzelner Räder oder Achsen zu vermeiden.

An das Steuergerät 16 können ferner Druckgeber 31, 32 und 33 angeschlossen werden, die Signale entsprechend den Steuerdrücken pq, pl, pd am Ausgang der Stellglieder 13 bis 15 zu Regelungs-, Überwachungs- oder Anzeigezwecken abgeben.

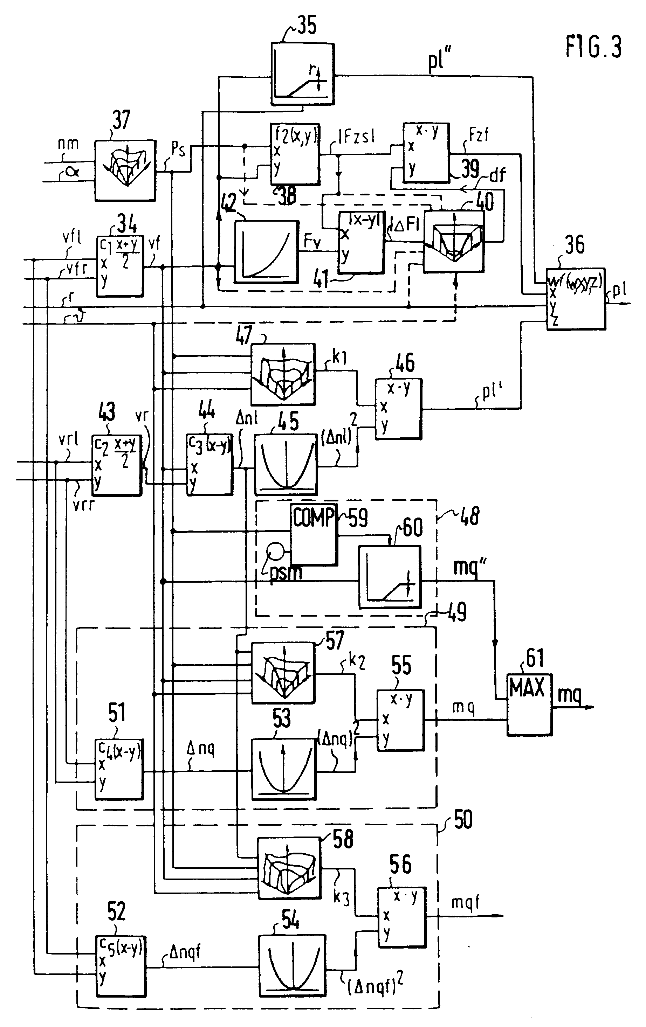

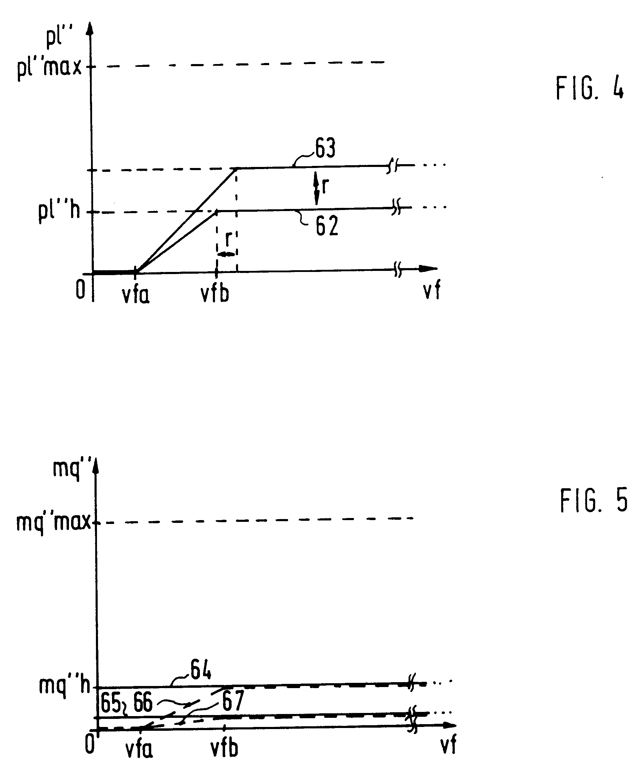

Das in Fig. 3 dargestellte Blockschaltbild zeigt ein Steuerverfahren zur Ansteuerung der Längskupplung 7. Über eine mit einer Konstanten $c_1$ gewichteten Mittelwertbildung 34 wird aus den Radgeschwindigkeitssignalen vfl und vfr eine, einer Fahrgeschwindigkeit entsprechende Geschwindigkeit vf (Fahrzeuggeschwindigkeit) der Räder an der Zusatzantriebsachse bestimmt. Über ein Kennlinienfeld 35 wird einem jeweiligen Wert der Geschwindigkeit der Räder an der Zusatzantriebsachse (nachstehend Fahrzeuggeschwindigkeit genannt) ein Wert einer Ansteuergröße $pl''$ zugeordnet. Die dieser Zuordnung zugrundeliegende Kennlinie wird hierbei durch die Stellgröße r (vom Fahrer angewählt) bestimmt. In ihrer Grundform ordnen die Kennlinien der Geschwindigkeit eine Ansteuergröße $pl''$ zu, die für kleine Geschwindigkeiten gleich Null, für höhere Geschwindigkeiten zunächst linear ansteigt und für noch höhere Geschwindigkeiten wieder konstant ist. Die Kennlinien werden weiter unten anhand Fig. 4 erläutert.

Die Ansteuergröße $pl''$ wird über einen ersten funktionellen Zusammenhang $f_1(Fzf, r, pl', pl'')$, 36 in eine Steuergröße pl zur Ansteuerung des Stellglieds 14 der Längskupplung 7 gewandelt. Der erste funktionelle Zusammenhang kann noch von weiteren Größen Fzf, r, $pl'$, beispielsweise der Stellgröße r abhängen. Im einfachsten Fall besteht der erste funktionelle Zusammenhang ($f_1(Fzf, r, pl', pl'')$, 36 in einer konstanten Übersetzung einer seiner Eingangsgrößen in die Ausgangsgröße (Steuergröße) pl, kann aber auch eine gewichtete Addition der Eingangsgrößen oder eine gewichtete Maximalwertauswahl aus ihnen sein.

Im folgenden werden die weiteren Eingangsgrößen des ersten funktionellen Zusammenhangs erläutert:

Über ein Drosselklappenwinkel-Drehzahl-Kennfeld 37 wird aus dem Motordrehzahlsignal nm und dem Drosselklappenwinkel alpha oder dem Fahrpedalsignal phi eine vom Fahrer bestimmte Solleistung Ps bei einer augenblicklichen Motordrehzahl nm bestimmt. Bei Motoren, die z. B. mit Turboladern ausgestattet sind, werden dem Kennfeld 37 zusätzlich ein Ladedruck- und ein Ladelufttemperatursignal pm und Tl zugeführt. Im Falle eines mit einer digitalen Motorelektronik zur Steuerung von Zündung und Einspritzung versehenen Kraftfahrzeugs, kann dieser in der Regel bereits ein Signal entsprechend dem Betrag der Solleistung |Ps| entnommen werden.

Aus der Fahrzeuggeschwindigkeit vf und aus der Solleistung Ps oder deren Betrag wird über einen zweiten funktionellen Zusammenhang $f_2(Ps, vf)$ 38, der in der Fig. 8 der DE-OS 36 08 059.4-12 anhand eines Diagramms näher erläutert ist, ein Betrag einer Sollzugkraft | Fzs | ermittelt. Dieser wird über eine Multiplikation 39 mit einem Verteilungsfaktor df zu einer Zugkraft Fzf der Zusatzantriebsachse verknüpft, und über den ersten funktionellen Zusammenhang $f_1(Fzf, r, pl', pl'')$, 36 in die Steuergröße pl zu Ansteuerung des Stellglieds 14 der Längskupplung gewandelt.

Der Verteilungsfaktor df wird über ein Kennfeld 40 aus einem Betrag eines Zugkraftüberschusses DELTA F gewonnen. Dieser wird mittels Differenz- und Betragsbildung 41 aus dem Betrag der Sollzugkraft |Fzs| und einer Fahrwiderstandskraft Fv bestimmt, wobei letztere über eine Fahrwiderstandskennlinie 42 aus der Fahrzeuggeschwindigkeit vf ermittelt wird.

Der Verteilungsfaktor df kann ferner über das erste Kennfeld 40 außer aus dem Betrag des Zugkraftüberschusses | DELTA F | auch aus dem Betrag der Sollzugkraft | Fzs |, aus der Solleistung Ps und der Geschwindigkeit vf, der Steuergröße r oder einer beliebigen Kombination dieser Steuergrößen bestimmt werden. Am Rande sei vermerkt, daß der Begriff "Kennfeld" als Oberbegriff für einen digitalisierten, (d. h., an Stützstellen erfaßten) in einem Speicherbereich abgelegten funktionellen Zusammenhang zu sehen ist, der im einfachsten Fall eine Konstante, weiter eine Kennlinie oder eine von einem oder mehreren Parametern veranderliche Kennlinie oder sogar ein von mehreren Kenngrößen abhängiges mehrdimensionales Kennfeld umfassen kann, wobei bei Werten zwischen den Stützstellen jeweils quantisiert oder interpoliert wird.

Zu erwähnen ist: Im Falle eines mit einem konstanten Wert df multiplizierten Betrags der Sollzugkraft |Fzs| bildet die Anordnung ein Verteilergetriebe mit einer festen Aufteilung des Antriebsmoments auf die angetriebenen Achsen nach (Simulation eines mechanischen Verteilergetriebes durch eine elektromechanische Anordnung mit einer steuerbaren Kupplung).

Wird der Verteilungsfaktor df über das erste Kennfeld 40 lediglich aus einer unabhängigen Variablen, - dem Betrag des Zugkraftüberschusses |DELTA F| oder der Sollzugkraft |Fzs| - bestimmt, so erweist sich eine Kennlinie als günstig, die entweder konstant oder (linear) abfallend ist.

Bei Verwendung der Solleistung Ps und der Geschwindigkeit vf als Eingangsgrößen erweist sich ein Kennfeld als günstig, das für kleine Werte des Betrags von Ps und vf zunächst einen konstanten, einem Maximalwert dfmax, fir höhere Werte von Ps und vf einen, einem abfallenden und für noch höhere Werte von Ps und vf einen, einem Minimalwert dfmin entsprechenden Wert des Verteilungsfaktors df aufweist.

Falls zusätzlich die Steuergröße r mit verarbeitet wird, kann eine Kennlinie (bzw. ein Kennfeld) des ersten Kennfelds 39 abhängig von r in Form, Grundwert dfmin, Steigung oder Maximalwert dfmax verändert werden.

In der DE-C-36 08 059. sind noch weitere Varianten zur Bestimmung des Verteilungsfaktors df genannt, die selbstverständlich auch hier zum Tragen kommen können; auf sie wird jedoch nicht weiter eingegangen.

Eine weitere, sinnvolle Eingangsgröße des ersten funktionellen Zusammenhangs ist ein Steuerwert $pl'$: Über eine, mit einer Konstanten $c_2$ gewichteten Mittelwertbildung 43 wird aus den Rädgeschwindigkeitssignalen vrl und vrr eine Geschwindigkeit vr der Rader an der Hauptantriebsachse 2 bestimmt. Aus einer, mit einer Konstanten $c_3$ gewichteten Differenz 44 der Geschwindigkeiten von Zusatz- und Hauptantriebsachse vf und vr resultiert eine Drehzahldifferenz DELTA nl an einer Eingangs- und Ausgangswelle der Langskupplung, die durch Potenzierung, vorzugsweise Quadratbildung 45 und Multiplikation 46 mit einem Faktor $k_1$ zum Steuerwert $pl'$ zusammengesetzt wird.

Der Faktor $k_1$ kann entweder konstant gewählt werden oder über ein zweites Kennfeld 47 aus vf und/oder dem Lenkeinschlagsignal theta ermittelt werden.

Im Falle eines konstanten Faktors $k_1$ entspricht die Ansteuerung der Längskupplung einer Fliehkraftregelung der Drehzahldifferenz DELTA nl an der Längskupplung (Kupplungsschlupf).

Wird $k_1$ allein aus der Geschwindigkeit vf bestimmt, so besteht das zweite Kennfeld aus einer Kennlinie, die mit wachsendem Betrag der Geschwindigkeit |vf| ansteigt. Wird zusätzlich das Lenkeinschlagsignal theta mit überwacht, wird die Ausgangsgröße $k_1$ des zweiten Kennfelds bei wachsendem Betrag des Lenkeinschlags relativ stark reduziert, um eine gute Lenkbarkeit des Kraftfahrzeugs zu ermöglichen.

Die Eingangsgröße $pl'$ stellt dabei einen "Überdrehschutz" (Begrenzung des Kupplungsschlupfs DELTA nl) dar und ist daher äußerst sinnvoll und in der Kombination noch wirksamer zum Erreichen eines guten Fahrverhaltens, als eines der Verfahren für sich alleine.

Als Erweiterung kann das erste Kennfeld 40 noch von einem Lenkeinschlagsignal theta beeinflußt werden (mit wachsendem Lenkeinschlag wird df relativ stark reduziert).

Ebenfalls gezeigt sind Funktionsblöcke 48 und 49 zur Ansteuerung eines kontinuierlich in seiner Sperrwirkung steuerbaren Querdifferentials 6 der Hauptantriebsachse 2 und eines kontinuierlich in seiner Sperrwirkung steuerbaren Differentials 8 der Zusatzantriebsachse 3 (Funktionsblock 50).

Dabei ist der funktionelle Ablauf zur Bestimmung einer Sperrmomentsteuergröße mq zur Ansteuerung des Querdifferentials 6 und einer Sperrmcmentsteuergröße mqf zur Ansteuerung des Differentials 8 weitgehend identisch mit dem zur Bestimmung des Steuerwerts $pl'$; allerdings erfordern die entsprechenden Kennfelder und Kenngrößen eine andere, insbesondere auch fahrzeugspezifische Anpassung.

Aus einer, mit einer Konstanten $c_4$ bzw. $c_5$ gewichteten Differenz 51 bzw. 52 der Radgeschwindigkeitssignale vrl und vrr an der Hauptantriebsachse bzw. vfl und vfr an der Zusatzantriebsachsachse resultiert eine Drehzahldifferenz DELTA nq an den Ausgangswellen des Querdifferentials 6 bzw. DELTA nqf an den Ausgangswellen des Differentials 8, die durch Potenzierung, vorzugsweise Quadratbildung 53 bzw. 54 und Multiplikation 58 bzw. 56 mit einem Faktor $k_2$ bzw. $k_3$ zu den Sperrmomentsteuergrößen $mq'$ bzw. mqf zusammengesetzt werden.

Die Faktoren $k_2$ bzw. $k_3$ können hierbei wieder konstant gewählt oder über ein drittes Kennfeld 57 bzw. ein viertes Kennfeld 58 jeweils aus der Drehzahldifferenz DELTA nl an der Eingangs- bzw. an der Ausgangswelle der Längskupplung und/oder der Sollleistung Ps und/oder der Geschwindigkeit vf der Räder an der Zusatzantriebsachse und/oder dem Lenkeinschlagsignal bestimmt werden. Hierbei wird der Faktor $k_2$ bzw. $k_3$ mit wachsenden Beträgen der Drehzahldifferenz |DELTA nl| an der Längskupplung, der Solleistung Ps und der Geschwindigkeit vf zunehmen und mit wachsendem Betrag des Lenkeinschlags, insbesondere an der Achse mit gelenkten Rädern, relativ stark abnehmen. Das dritte Kennfeld 57 und das vierte Kennfeld 58 sowie Anzahl und Auswahl der Eingangsgrößen können dabei unterschiedlich sein.

Zur Verbesserung des Eindrehverhaltens des Kraftfahrzeugs bei Kurvenfahrt hat es sich als günstig erwiesen, der Sperrmomentsteuergröße $mq'$ -

(Hauptantriebsachse) eine weitere Sperrmomentsteuergröße $mq''$ zu überlagern: Ein Komparator 59 überwacht, ob die Solleistung Ps kleiner als ein im mittleren Bereich des von der Brennkraftmaschine verfügbaren Leistungsbands liegenden Leistungswert Psm (ca. 50 % der Maximalleistung) ist. Ist dies der Fall, so gibt er ein Signal an ein nachfolgendes fünftes Kennfeld 60 ab, welches der Sperrmomentsteuergröße $mq''$ einen, einem höheren, konstanten Sperrwert (beispielsweise 20 % Sperrwirkung) entsprechenden Wert zuweist. Ist Ps größer als Psm, so weist das Kennfeld 60 der weiteren Sperrmomentsteuergröße $mq''$ einen, einem niedrigeren, konstanten Sperrwert (beispielsweise 5 % Sperrwirkung) entsprechenden Wert zu.

Über das fünfte Kennfeld kann dieser weiteren Sperrmomentsteuergröße zusätzlich eine geschwindigkeitsabhängige Charakteristik überlagert werden, in einem niedrigen Geschwindigkeitsbereich von vf (bis beispielsweise 20 km/h) kann die Sperrwirkung aufgehoben und in einem daran angrenzenden Geschwindigkeitsbereich (bis beispielsweise 50 km/h) auf den leistungsabhängig vorbestimmten Wert angehoben werden und für noch höhere Geschwindigkeiten dort verharren.

Eine Maximalwertauswahl 61 schließlich erzeugt die endgültige Sperrmomentsteuergröße mq aus dem größeren der beiden Werte $mq'$ und $mq''$ zur Ansteuerung des Stellglieds 13 des Differentials 6.

Selbstverständlich kann auch dem Funktionsblock 50 zur Ansteuerung eines sperrbaren Differentials 8 an der Zusatzantriebsachse 3 eine Ansteuerung entsprechend dem Funktionsblock 48 überlagert werden.

Die Konstanten $c_1$ bis $c_5$, der erste und der zweite funktionelle Zusammenhang 36 bzw. 38 und das erste bis vierte Kennfeld sind nur allgemein angegeben, da sie einer unterschiedlichen Anpassung an einen jeweiligen Fahrzeugtyp bedürfen. Hierbei liegen die Konstanten $c_1$ bis $c_5$ jeweils durch Raddurchmesser und Übersetzungsverhältnisse fest. Für die Auslegung der funktionellen Zusammenhange und der Kennfelder ist die Angabe eines Beispiels dagegen wenig sinnvoll, weshalb lediglich Richtlinien angegeben werden, mit denen diese problemlos an die unterschiedlichen Fahrzeuge anpaßbar sind.

Lediglich auf das Kennlinienfeld 35 und das fünfte Kennfeld 60 soll noch näher eingegangen werden. Fig. 4 zeigt zwei Kennlinien, 62 und 63, entsprechend dem Kennlinienfeld 35, welche einer Fahrgeschwindigkeit vf jeweils eine Ansteuergröße $pl''$ zuordnet. Die Kennlinien werden hierbei über die Stellgröße r angewählt und entsprechen beispielsweise einem vom Fahrer anwählbaren Fahrprogramm für trockene Fahrbahn, 62, und für nasse Fahrbahn, 63; hiervon sind sowohl die Geschwindigkeitsbereiche abhängig, in denen einzelne Abschnitt der Kurven wirksam sind, als auch die Höhe der Ansteuerwerte. Die Werte für vfa können beispielsweise bei 20 km/h für $pl''h$ etwa bei 30 % bzw. bei 50 % Vollaussteuerung ($pl''max$) liegen.

In Fig. 5 sind Kennlinien 64, 65 bzw. 66, 67 (gestrichelt) entsprechend dem fünften Kennfeld 60 gezeigt. Die Kennlinien werden hierbei abhängig von der Solleistung Ps bzw. vom Überschreiten der Leistungsschwelle Psm (beispielsweise 50 % Maximalleistung liegend) angewählt. Ist Ps kleiner als Psm, so ist die Kennlinie 64 (bzw. 66) aktiv, andernfalls die Kennlinie 65 (bzw. 67); hierdurch werden insbesondere Verspannungen im Differential bei hohen Motorleistungen vermieden. Bei zusätzlich geschwindiggkeitsabhängiger Kennlinie gelten die gestrichelt gezeichneten Kurven. Werte für vfa, vfb, $mq''h$ und $mq''n$ können beispielsweise bei 20 km/h (vfa), 50 km/h (vfb), 20 % $mq''max$ ($mq''h$) und 5 % $mq''max$ ($mq''n$) liegen.

Die Anordnung ist selbstverständlich auch zu einer Ansteuerung eines steuerbaren Verteilergetriebes bzw. eines kontinuierlich in seiner Sperrwirkung steuerbaren Zwischenachsdifferentials mit dem Steuerwert pl geeignet.

Der Betrag der Sollzugkraft |Fzs|, der Verteilungsfaktor df, die Ansteuerwerte $pl''$ und $mq''$, der erste, zweite und dritte Faktor $k_1$, $k_2$ und $k_3$ sowie die Fahrwiderstandsleistung Pv werden üblicherweise aus der Fahrgeschwindigkeit ermittelt. Da allerdings an der Zusatzantriebsachse seltener Schlupf auftreten dürfte als an der Hauptantriebsachse, kann die Fahrgeschwindigkeit der Geschwindigkeit der Räder an der Zusatzantriebsachse gleichgesetzt werden. Dies schließt jedoch nicht aus, daß die Fahrgeschwindigkeit auch auf anderem Wege bestimmt werden kann, etwa durch berührungslos messende Sensoren oder durch Mittelwertbildung über die Geschwindigkeiten aller Räder. Ebenso kann der Wert im Verlauf des Rechenverfahrens auf Plausibilität überwacht und im Falle nicht plausibler Werte auch geschätzt oder korrigiert werden.

## Patentansprüche

1. Anordnung zur Steuerung der Kraftübertragung auf die Achsen (2, 3) eines allradgetriebenen Kraftfahrzeugs, mit einer, mit einem Querdifferential (6) versehenen Hauptantriebsachse (2) und einer, über eine mit einem Stellglied (14) kontinuierlich steuerbaren Längskupplung (7) angetriebenen Zusatzantriebsachse (3), wobei ein, vorzugsweise mit einem Mikrorechner ausgerüstetes Steuergerät (16) Eingangssignale wenigstens von Gebern (18 bis 33) erhält, welche die Geschwindigkeiten (vfl, vfr; vf = (vfl + vfr)/2) der Räder (9, 10) an der Zusatzantriebsachse (3) erfassen, wobei das Steuergerät (16) eine Steuergröße ($pl = f_1$(Fzf, r, pl', pl'')) für das Stellglied (14) der Längskupplung (7) so erzeugt, daß sie in einem funktionellen Zusammenhang mit wenigstens einer Ansteuergröße (Fzf(Ps, vf) oder $pl'((vf-vr)^2)$) besteht, die aus einer funktionellen Verknüpfung wenigstens zweier Betriebs- oder Fahrparameter (-(Ps und vf) oder $((vf-vr)^2)$) gebildet ist, **dadurch gekennzeichnet,** daß die Steuergröße ($pl = f_1$(Fzf, r, pl', pl'')) zusätzlich in einem funktionellen Zusammenhang mit einer Ansteuergröße (pl'') steht, welche allein aus der aus der Geschwindigkeit (vfl, vfr; $vf = (vfl + vfr)/2$) der Räder (9, 10) an der Zusatzantriebsachse (3) bestimmten Fahrgeschwindigkeit (vf) ermittelt wird, wobei in einem ersten, niedrigen Geschwindigkeitsbereich (0 kleiner oder gleich vf kleiner oder gleich vfa) die Ansteuerung aufgehoben und in einem zweiten, höheren Geschwindigkeitsbereich (vfa kleiner vf kleiner oder gleich vfb) die Ansteuergröße (pl'') von (0) an beginnend mit wachsender Geschwindigkeit (vf) auf einen Steuergrößenwert (pl''h) angehoben wird, und oberhalb des zweiten Geschwindigkeitsbereichs (vf größer vfb) auf diesem Steuergrößenwert (pl''h) verharrt.

2. Anordnung nach Anspruch 1, dadurch gekennzeichnet, daß der Steuergrößenwert (pl''h) und die Geschwindigkeitsbereiche im Steuergerät (16) durch eine, eine Steuergröße (r) abgebende Verstelleinheit (18) variiert werden können.

3. Anordnung nach Anspruch 1 oder 2, dadurch gekennzeichnet, daß das Steuergerät (16) weitere Eingangssignale wenigstens von Gebern (25 bis 28) erhält, welche die Geschwindigkeiten der Räder (11, 12) an der Hauptantriebsachse (2) erfassen und/oder von Gebern (19 bis 24), welche eine Brennkraftmaschinendrehzahl (nm), einen Fahrpedal- und/oder Drosselklappenwinkel (alpha) und/oder einen Ladedruck (pm) und/oder eine Ladelufttemperatur (Tl) und/oder einen Lenkwinkel (theta) erfassen und die Steuergröße (pl) für das Stellglied (14) der Längskupplung (7) so erzeugt, daß sie in einem funktionellen Zusammenhang ($pl = f_1$-(Fzf, r, pl', pl'')) (36) mit wenigstens einer weiteren Ansteuergröße (pl') steht, die einer vorzugsweise mit einem ersten Faktor versehenen Potenz der Drehzahldifferenz (DELTA nl) an der Eingangs- und der Ausgangswelle der Längskupplung entspricht.

4. Anordnung nach wenigstens einem der vorangehenden Ansprüche, dadurch gekennzeichnet, daß das Steuergerät (16) die Steuergröße (pl) für das Stellglied (14) der Längskupplung (7) so erzeugt, daß sie zusätzlich in einem funktionellen Zusammenhang ($pl = f_1$(Fzf, r, pl', pl'')) (36) mit wenigstens einer Zugkraft (Fzf) an der Zusatzantriebsachse (3) steht, wobei die Zugkraft (Fzf) der Räder (9, 10) an der Zusatzantriebsachse (3) aus einer multiplikativen Verknüpfung (39) eines aus einer Sollleistung und einer Fahrgeschwindigkeit (vf) bestimmten Betrags einer Sollzugkraft ( Fzs $= F_2$(Ps, vf)) (38) aller Räder mit einem aus dem Betrag der Sollzugkraft ( Fzf ) und/oder mittelbar oder unmittelbar aus wenigstens einem der Eingangssignale über ein erstes Kennfeld (40) ermittelten Verteilungsfaktor (df) bestimmt wird, wobei der Verteilungsfaktor (df) über das erste Kennfeld (40) wenigstens aus dem Betrag eines Zugkraftüberschusses (|DELTA F|) ermittelt wird, welcher aus der Differenz des Betrags der Sollzugkraft (|Fzs|) (41) und eines, über eine Fahrwiderstandskennlinie (42) aus der Fahrgeschwindigkeit (vf) abgeleiteten Fahrwiderstands (Fv) bestimmt wird.

5. Anordnung nach wenigstens einem der vorangehenden Ansprüche, dadurch gekennzeichnet, daß der funktionelle Zusammenhang ($pl = f_1$(Fzf, r, pl', pl'')) (36) in einer Maximalwertauswahl oder einer gewichteten Addition aus seinen Einflußgrößen besteht.

6. Anordnung nach wenigstens einem der vorangehenden Ansprüche, dadurch gekennzeichnet, daß wenigstens ein sperrbares Differential (6, wenigstens einer Achse (2, 3) eines Kraftfahrzeugs (1) über wenigstens ein von einem Steuergerät (16) angesteuertes Stellglied (13, 15) in Abhängigkeit von Betriebs- und/oder Fahrparametern kontinuierlich in seiner Sperrwirkung steuerbar ist, wobei die Leistung (Ps) einer Antriebs-Brennkraftmaschine (4) als steuernder Betriebsparameter dient und das Steuergerät (16) das Stellglied (13, 15) bis zu einem im mittleren Bereich des von der Brennkraftmaschine (4) verfügbaren Leistungsbandes (0 kleiner Ps kleiner oder gleich Psmax) liegenden Leistungswert (Psm) mit einer ersten, einem höheren Sperrwert entsprechenden Steuergröße (mq'h) und oderhalb dieses Leistungswerts (Psm) mit einer zweiten, einem niedrigeren Sperrwert entsprechenden Steuergröße (mq'n) beaufschlagt.

7. Anordnung nach Anspruch 6, dadurch gekennzeichnet, daß als weiterer, steuernder Parameter der Fahrparamter Fahrzeuggeschwindigkeit (vf) hinzukommt, wobei in einem ersten niedrigen Geschwindigkeitsbereich (0 kleiner oder gleich vf kleiner oder gleich vfa) die Sperrwirkung aufgehoben und in einem zweiten, höheren Geschwindigkeitsbereich (vfa kleiner vf kleiner oder gleich vfb) die Steuergröße ($mq'$) von (0) beginnend mit wachsender Geschwindigkeit (vf) auf die dem leistungsabhängig vorbestimmten Sperrwert entsprechende Steuergröße ($mq'h$) angehoben wird.

8. Anordnung nach Anspruch 6 oder 7, dadurch gekennzeichnet, daß der Ansteuergröße ($mq'$) eine weitere Steuergröße (mq) überlagert wird, welche wenigstens von einer Funktion der Drehzahldifferenz (DELTA nq) an den Ausgangswellen des Differentials abhängt.

9. Anordnung nach Anspruch 8, dadurch gekennzeichnet, daß die weitere Steuergröße (mq) zusätzlich von einer Funktion der Leistung (Ps) und/oder einer Drehzahldifferenz (DELTA nl) zwischen den Rädern zweier Achsen des Kraftfahrzeugs und/oder einem Lenkwinkel (theta) abhängt.

10. Anordnung nach Anspruch 9, dadurch gekennzeichnet, daß die Funktion der Drehzahldifferenz (DELTA nq) einer Potenz, vorzugsweise dem Quadrat der Drehzahldifferenz $(DELTA\ nq)^2$ an den Ausgangswellen des Differentials entspricht.

11. Anordnung nach wenigstens einem der Ansprüche 6 bis 10, dadurch gekennzeichnet, daß das Stellglied (13, 15) jeweils mit dem größeren Wert der beiden Steuergrößen ($mq'$, mq) angesteuert wird.

**Claims**

1. An arrangement for controlling the transmission of power to the axles (2, 3) of an all-wheel drive motor vehicle, having a main drive axle (2) provided with a transverse differential (6) and having a supplementary drive axle (3) driven via a longitudinal clutch (7) which can be continuously controlled by means of a correcting element (14), wherein a control device (16) which is preferably equipped with a microcomputer receives input signals at least from transmitters (18 to 33) which detect the speeds (vfl, vfr; vf = (vfl + vfr)/2) of the wheels (9, 10) on the supplementary drive axle (3), wherein the control device (16) produces a control value ($pl = f_1$ (Fzf, r, Pl', pl'')) for the correcting element (14) of the longitudinal clutch (7) such that it is in functional relationship with at least one control value (Fzf(Ps, vf) or pl' $((vf-vr)^2)$)

which is formed from a functional connection of at least two operating or travel parameters (-(Ps and vf) or ((vf-vr)2)), characterised in that the control value ($pl = f_1$(Fzf, r, Pl' , Pl'')) is additionally in functional relationship with a control value (Pl'' ) which is determined alone from the travel speed (vf) which is determined from the speed (vfl, vfr; vf = (vfl + vfr)/2) of the wheels (9, 10) on the supplementary drive axle (3), wherein in a first, low speed range (0 smaller than or equal to vf smaller than or equal to vfa) the control is removed and in a second higher speed range (vfa smaller than vf smaller than or equal to vfb) the control value (Pl'') is raised to a control value (Pl''h) with increasing speed (vf) starting from (0), and remains at this control value (pl''h) above the second speed range (vf greater than vfb).

2. An arrangement according to claim 1, characterised in that the control value (pl''h) and the speed ranges in the control device (16) can be varied by means of a regulating unit (18) transmitting a control value (r).

3. An arrangement according to claim 1 or 2, characterised in that the control device (16) receives further input signals at least from transmitters (25 to 28) which detect the speeds of the wheels (11, 12) on the main drive axle (2) and/or from transmitters (19 to 24) which detect an internal combustion engine speed (nm), an accelerator and/or throttle valve angle (alpha) and/or a boost pressure (pm) and/or a boost temperature (Tl) and/or a steering angle (theta) and produces the control value (pl) for the correcting element (14) of the longitudinal clutch (7) such that it is in functional relationship ($pl = f_1$(Fzf, r, Pl', Pl'')) (36) with at least one further control value (pl') which corresponds to an exponent of the rotational speed difference (DELTA nl) at the input and the output shaft of the longitudinal clutch, the exponent preferably being provided with a first factor.

4. An arrangement according to at least one of the preceding claims, characterised in that the control device (16) produces the control value (pl) for the correcting element (14) of the longitudinal clutch (7) such that it is also in functional relationship ($pl = f_1$ (Fzf, r, Pl', Pl'')) (36) with at least one tensile force (Fzf) on the supplementary drive axle (3), wherein the tensile force (Fzf) of the wheels (9, 10) on the supplementary drive axle (3) is determined from a multiplicative connection (39) of a value - determined from a rated capacity and a travel speed (vf) - of a rated tensile force ($Fzs = F_2 - (Ps, vf)$) (38) of all wheels with a distribution factor (df) determined from the sum of the rated tensile force (Fzf) and/or indirectly or directly from at least one of the input signals via a first performance graph (40), wherein the distribution factor (df) is determined via the first performance graph (40) at least from the value of a tensile force excess (DELTA F) which is determined from the difference of the value of the rated tensile force (Fzs) (41) and a travel resistance (Fv) derived from the travel speed (vf) via a travel resistance characteristic line (42).

5. An arrangement according to at least one of the preceding claims, characterised in that the functional relationship ($pl = f_1(Fzf, r, Pl', Pl'')$) (36) consists in a maximum value selection or a weighted addition from its influential values.

6. An arrangement according to at least one of the preceding claims, characterised in that at least one lockable differential (6) of at least one axle (2, 3) of a motor vehicle (1) can be continuously controlled in its locking effect as a function of operating and/or travel parameters via at least one correcting element (13, 15) controlled by a control device (16), wherein the output (Ps) of a driving internal combustion engine (4) serves as controlling operating parameter and the control device (16) acts upon the correcting element (13, 15) up to an output value (Psm) lying in the middle region of the output band (0 smaller than Ps smaller than or equal to Psmax) at the disposal of the internal combustion engine (4), the output value (Psm) having a first control value (mq' h) corresponding to a higher locking value and above this output value (Psm) having a second control value (mq' n) corresponding to a lower locking value.

7. An arrangement according to claim 6, characterised in that the travel parameter vehicle speed (vf) is added as a further controlling parameter, wherein in a first low speed range (0 smaller than or equal to vf smaller than or equal to vfa) the locking effect is removed and in a second, higher speed range (vfa smaller than vf smaller than or equal to vfb) the control value (mq' ) is raised to the control value (mq' h) corresponding to the locking value predetermined so as to be output-dependent with increasing speed (vf) starting from (0).

8. An arrangement according to claim 6 or 7, characterised in that a further control value (mq) is superimposed on the control value (mq' ), the former being dependent at least on a function of the rotational speed difference (DELTA nq) at the output shafts of the differential.

9. An arrangement according to claim 8, characterised in that the further control value (mq) is additionally dependent on a function of the output (Ps) and/or of a rotational speed difference (DELTA nl) between the wheels of two axles of the motor vehicle and/or a steering angle (theta).

10. An arrangement according to claim 9, characterized in that the function of the rotational speed difference (DELTA nq) corresponds to an exponent, preferably to the square of the rotational speed difference ($DELTA nq)^2$ at the output shafts of the differential.

11. An arrangement according to at least one of the claims 6 to 10, characterised in that the correcting element (13, 15) is in each case controlled by the greater value of the two control values (mq', mq).

**Revendications**

1. Dispositif de commande de la transmission aux essieux (2, 3) d'un véhicule automobile toutes roues motrices, comportant un essieu moteur principal (2) pourvu d'un différentiel transversal (6) et comportant un essieu moteur supplémentaire (3) entraîné par un accouplement longitudinal (7) commandé en continu par un organe de réglage (4), dans lequel un appareil de commande (16) équipé de préférence d'un microcalculateur reçoit des signaux d'entrée au moins de capteurs (18 à 33) qui enregistrent les vitesses (vfl, vfr ; vf = (vfl + vfr)/2) des roues (9, 10) sur l'essieu moteur supplémentaire (3), l'appareil de commande (16) engendrant une grandeur d'initialisation de commande ($pl = f_1$ (Fzf, r, pl', pl'')) pour l'organe de réglage (14) de l'accouplement longitudinal (7), telle qu'elle soit constituée par une relation fonctionnel le avec au moins une grandeur de commande. initiale (Fzf (Pf, vf) ou pl' ($(vf-vr)^2$)), qui est formée par un enchaînement fonctionnel d'au moins deux paramètres de fonctionnement ou de marche ((Ps et vf)) ou (($vf-vr)^2$)), caractérisé en ce que la grandeur de commande ($pl = f_1$ (Fzf, r, pl', pl'')) se trouve en plus dans une relation fonctionnelle avec une grandeur de commande initiale (pl'') qui est calculée uniquement à partir de la vitesse de marche (vf) déterminée par la vitesse (vfl, vfr ;

vf = (vfr)/2) des roues (9, 10) sur l'essieu moteur supplémentaire (3), dans une première gamme de petites vitesses (0 inférieur ou égal à vf inférieur ou égal à vfa) la commande initiale étant supprimée et dans une deuxième gamme de grandes vitesses (vfa inférieur à vf inférieur ou égal à vfb) la grandeur de commande initiale (pl") étant relevée, à partir de (0) à une vitesse (vf) croissante, jusqu'à une valeur de grandeur de commande (pl" h) et restant sur cette valeur de grandeur de commande (pl" h), au-dessus de la deuxième gamme de vitesses (vf supérieur à vfb).

2. Dispositif selon la revendication 1, caractérisé en ce qu'il est possible de faire varier la valeur de grandeur de commande (pl" h) et les gammes de vitesses dans l'appareil de commande (16), au moyen d'une unité de réglage (18) délivrant une grandeur de commande (r).

3. Dispositif selon la revendication 1 ou 2, caractérisé en ce que l'appareil de commande (16) reçoit d'autres signaux d'entrée au moins de capteurs (25 à 28) qui enregistrent les vitesses des roues (11, 12) sur l'essieu moteur principal (2) et/ou de capteurs (19 à 24) qui enregistrent une vitesse de rotation du moteur à combustion interne (nm), un angle de pédale d'accélérateur et/ou de clapet d'étranglement ($\alpha$) et/ou une pression de charge (pm) et/ou une température d'air de charge (T1) et/ou un angle de direction ($\theta$) et en ce qu'il engendre la grandeur de commande (pl) pour l'organe de réglage (14) de l'accouplement longitudinal (7), de manière qu'elle soit dans une relation fonctionnelle (pl = $f_1$ (Fzf, r, pl', pl")) (36) avec au moins une autre grandeur de commande initiale (pl') qui correspond à une puissance pourvue de préférence d'un premier facteur, de la différence de vitesse de rotation ($\triangle$nl) sur l'arbre d'entrée et l'arbre de sortie de l'accouplement longitudinal.

4. Dispositif selon l'une au moins des revendications précédentes, caractérisé en ce que l'appareil de commande (16) engendre la grandeur de commande (pl) pour l'organe de réglage (14) de l'accouplement longitudinal (7), de manière qu'elle soit en plus dans une relation fonctionnelle (pl = $f_1$ (Fzf, r, pl', pl")) (36) avec au moins une force de traction (Fzf) sur l'essieu moteur supplémentaire (3), la force de traction (Fzf) des roues (9, 10) sur l'essieu moteur supplémentaire (3), étant déterminée à partir de la multiplication (39) d'une valeur, déterminée à partir d'une puissance de consigne et d'une vitesse de marche (vf), d'une force de traction de consigne (Fzs = $F_2$ (Ps, vf)) (38) de toutes les roues, par un facteur de distribution (df) déterminé à partir de la valeur de la force de traction de consigne (Fzf) et/ou directement ou indirectement à partir d'au moins un des signaux d'entrée, sur un premier champ caractéristique (40), le facteur de distribution (df) sur le premier champ caractéristique (40) étant déterminé au moins à partir de la valeur d'un excédent de force de traction (|$\triangle$F|) qui est déterminée à partir de la différence de la valeur de la force de traction de consigne (|Fzs|) (41) et d'une résistance à la marche (Fv), dérivée sur une courbe caractéristique de résistance à la marche (42), à partir de la vitesse de marche (vf).

5. Dispositif selon l'une au moins des revendications précédentes, caractérisé en ce que la relation fonctionnelle (pl = $f_1$ (Fzf, r, pl', pl")) (36) consiste en une sélection de valeurs maximales ou en une addition pondérée de ses grandeurs d'influence.

6. Dispositif selon l'une au moins des revendications précédentes, caractérisé en ce qu'au moins un différentiel (6) pouvant être bloqué d'au moins un essieu (2, 3) d'un véhicule automobile (1), peut être commandé par l'intermédiaire d'au moins un organe de réglage (13, 15) commandé par un appareil de commande (16), en fonction de paramètres de fonctionnement et/ou de marche, en continu, dans son effet de blocage, la puissance (Ps) d'un moteur à combustion interne d'entraînement (4) servant de paramètre de fonctionnement de commande et l'appareil de commande (16) agissant sur l'organe de réglage (13, 15) jusqu'à une valeur de puissance (Psm), située dans la zone centrale de la bande de puissance (0 inférieur à Ps inférieur ou égal à Ps max) mise à disposition par le moteur à combustion interne (4), a avec une première grandeur de commande (mq' h) correspondant à une valeur de blocage supérieure et, au-dessus de cette valeur de puissance (Psm), a avec une deuxième grandeur de commande (mq' n), a correspondant à une valeur de blocage inférieure.

7. Dispositif selon la revendication 6, caractérisé en ce que s'ajoute comme autre paramètre de commande des paramètres de marche, la vitesse du véhicule (vf), l'effet de blocage étant supprimé dans une première gamme de petites vitesses (0 inférieur ou égal à vf inférieur ou égal à vfa) et la grandeur de commande (mq') étant relevée, à partir de (0), à vitesse (vf) croissante, à la grandeur de commande (mq' h) correspondant à la valeur de blocage prédéterminée en fonction de la puissance, dans une deuxième gamme de grandes vitesses (vfa inférieur à vf inférieur ou égal à vfb).

8. Dispositif selon la revendication 6 ou 7, caractérisé en ce qu'à la grandeur de commande initiale (mq') est asservie une autre grandeur de commande (mq) qui dépend au moins d'une fonction de la différence de vitesse de rotation (△nq) sur les arbres de sortie du différentiel.

9. Dispositif selon la revendication 8, caractérisé en ce que l'autre grandeur de commande (mq) dépend en outre d'une fonction de la puissance (Ps) et/ou d'une différence de vitesse de rotation (△n1) entre les roues de deux essieux du véhicule automobile et/ou un angle de direction ($\theta$).

10. Dispositif selon la revendication 9, caractérisé en ce que la fonction de la différence de vitesse de rotation (△nq) correspond à une puissance, de préférence au carré de la différence de vitesse de rotation (△nq)$^2$ sur les arbres de sortie du différentiel.

11. Dispositif selon l'une au moins des revendications 6 à 10, caractérisé en ce que l'organe de réglage (13, 15) est commandé dans chaque cas avec la plus grande des deux grandeurs de commande (mq',mq).

# FIG.1

# FIG.2

EP 0 288 666 B1

FIG.3

FIG. 4

FIG. 5